# DEMANDE DE BREVET EUROPEEN

(11) **EP 3 511 894 A1**
(43) Date de publication de la demande: **17.07.2019**
(21) Numéro de dépôt: 19150402.6
(22) Date de dépôt: 04.01.2019
(51) Int. Cl.: G06Q 30/02

(54) **ENSEMBLE LOCAL D'AFFICHAGE NUMERIQUE ET RESEAU DE DIFFUSION DE CONTENUS NUMERIQUES COMPORTANT DE TELS ENSEMBLES**

(30) Priorité: 10.01.2018 FR 1850208
(71) Demandeur: JCDecaux SA, 92200 Neuilly-Sur-Seine (FR)
(72) Inventeur: BASU, Anirvan, 75005 PARIS (FR); BERTRAND, Ludovic, 78980 BREVAL (FR)
(74) Mandataire: Cabinet Plasseraud

(57) **Abrégé**

Ensemble local d'affichage numérique (E) comprenant plusieurs dispositifs d'affichage numériques (2a-2e), situés à proximité les uns des autres et des dispositifs de détection d'audience (13). On commande les dispositifs d'affichage numériques (2) en fonction des informations fournies par les dispositifs de détection d'audience.

## Description

### DOMAINE

La présente description concerne les ensembles locaux d'affichage numériques et les réseaux (locaux ou distants) de diffusion de contenus numériques comportant de tels ensembles.

Plus particulièrement, la présente description concerne un ensemble local d'affichage numérique comprenant plusieurs dispositifs d'affichage numériques situés à proximité les uns des autres, destinés à être vus par des personnes du public et comprenant chacun au moins un écran numérique et une unité centrale comportant un module de commande d'écran adapté pour faire afficher des contenus numériques par l'écran numérique.

### ARRIERE-PLAN

Le document US2013/0151656 décrit un exemple d'un tel ensemble d'affichage.

### RESUME

Les ensembles locaux d'affichage numériques de ce type sont prévus pour jouer des listes de contenus de façon répétitive, le cas échéant en modifiant la liste de contenus selon des conditions ambiantes locales.

La présente description a notamment pour but d'adapter en temps réel ou quasi temps-réel le fonctionnement de l'ensemble local d'affichage numérique à l'audience détectée, pour maximiser l'impact sur l'audience, et ce sans nécessiter de bande passante supplémentaire pour communiquer avec un ou des serveurs distants et en utilisant les capacités de calcul limitées des dispositifs d'affichage numériques usuels.

A cet effet, on propose un ensemble local d'affichage numérique du genre en question dans lequel ledit ensemble local d'affichage numérique comporte en outre des dispositifs de détection d'audience adaptés pour capter des informations relatives aux personnes situées à proximité des dispositifs d'affichage numériques,
et l'ensemble local d'affichage numérique comportant en outre un système de supervision local (c'est-à-dire un système de supervision à la proximité, dite « edge ») adapté pour :
- à partir des informations captées, déterminer en temps réel au moins une caractéristique de foule représentative d'un comportement collectif des personnes situées à proximité des dispositifs d'affichage numérique, ladite au moins une caractéristique de foule étant choisie parmi une densité de foule et une vitesse de déplacement de foule, et
- commander les modules de commande d'écran respectifs des dispositifs d'affichage numériques en fonction de ladite au moins une caractéristique de foule, ledit système de supervision local étant adapté pour déterminer en temps réel les contenus numériques à faire afficher respectivement par les dispositifs d'affichage numériques en fonction de ladite au moins une caractéristique de foule mesurée,
dans lequel le système de supervision local comprend des modules de supervision appartenant respectivement aux unités centrales de plusieurs dispositifs d'affichage de l'ensemble d'affichage numérique, les modules de supervision communiquant entre eux par un protocole de communication pair à pair,
et ledit système de supervision local comprend une intelligence artificielle répartie sur lesdits modules de supervision, qui est adaptée pour déterminer ladite au moins une caractéristique de foule, par un calcul distribué parmi lesdits modules de supervision par la communication pair à pair.

De cette façon, l'adaptation à l'audience et éventuellement l'interaction avec une foule détectée peut être faite localement, de façon très réactive, indépendamment de la bande passante disponible pour communiquer avec un ou des serveurs distants.

De plus, cette configuration permet de traiter uniquement en local d'éventuelles données individuelles provenant des dispositifs de détection d'audience, en préservant ainsi la vie privée des personnes constituant l'audience.

Dans divers modes de réalisation de l'ensemble local d'affichage numérique, on peut éventuellement avoir recours en outre à l'une et/ou à l'autre des dispositions suivantes :
- ledit système de supervision local est adapté pour déterminer plusieurs caractéristiques de foule comprenant la densité de foule, la vitesse de déplacement de foule, une direction de déplacement de la foule et une proximité de la foule par rapport à au moins un des dispositifs d'affichage numériques ;
- ledit système de supervision local est adapté pour recevoir des données externes depuis au moins une ressource distante et pour commander les modules de commande d'écran respectifs des dispositifs d'affichage en fonction desdites données externes ;
- lesdites données externes comprennent des données météorologiques ;
- lesdites données externes comprennent des données de téléphonie mobile fournies par des opérateurs de téléphonie mobile sur la localisation et l'usage des terminaux mobiles ;
- lesdites données externes comprennent des données géolocalisées provenant de réseaux sociaux ;
- le dispositif de détection d'audience comprend au moins un détecteur choisi parmi une caméra, une interface WiFi, une interface NFC, une interface Bluetooth®, un détecteur radar, un détecteur de passage ;
- la caméra est choisie parmi une caméra à détection de mouvement (notamment caméra infra-rouge), une caméra 360 degrés et une caméra 3D ;
- au moins un des dispositifs d'affichage numériques comporte une interface d'entrée permettant à une personne du public de commander ledit dispositif d'affichage numérique ;
- ladite interface d'entrée est choisie parmi une interface tactile et une interface de communication radio permettant une interaction avec un téléphone mobile utilisé par ladite personne du public ;
- chaque dispositif d'affichage numérique est adapté pour fonctionner :
   osoit en mode normal où ledit dispositif d'affichage numérique affiche des contenus numériques choisis parmi un premier groupe de contenus,
   osoit dans un mode d'interaction avec la foule où ledit dispositif d'affichage numérique affiche au moins un contenu numérique préemptif choisi parmi un deuxième groupe de contenus,
   ledit système de supervision local étant adapté pour faire fonctionner au moins un des dispositifs d'affichage numériques de l'ensemble local d'affichage numérique en mode d'interaction avec la foule lorsqu'une foule est identifiée ;
- le système de supervision local est adapté pour déterminer en temps réel au moins la densité de foule et le système de supervision local est adapté pour faire fonctionner au moins un des dispositifs d'affichage numériques en mode d'interaction avec la foule lorsque ledit système de supervision local détecte une densité de foule supérieure à une densité minimale au voisinage dudit au moins un dispositif d'affichage numérique après une période de fonctionnement en mode normal ;
- ledit système de supervision local est adapté pour déterminer en outre, en temps réel, au moins la vitesse de foule et le système de supervision local est adapté pour faire fonctionner au moins un des dispositifs d'affichage numériques en mode d'interaction avec la foule lorsque le système de supervision local détecte une densité de foule supérieure à une densité minimale et une vitesse de foule inférieure à une vitesse maximale au voisinage dudit au moins un dispositif d'affichage numérique ;
- le système de supervision local est adapté pour déterminer en outre, en temps réel, au moins une proximité de la foule par rapport à chaque dispositif d'affichage numérique de l'ensemble local d'affichage numérique et le système de supervision local est adapté pour déterminer, dans ledit ensemble local d'affichage numérique, au moins un dispositif d'affichage numérique le plus proche de la foule et faire fonctionner ledit au moins un dispositif d'affichage numérique le plus proche de la foule en mode d'interaction avec la foule ;
- le dispositif de détection de foule est adapté pour, en fonction de ladite direction de déplacement de foule et de ladite proximité de la foule par rapport à chaque dispositif d'affichage numérique de l'ensemble local d'affichage numérique :
   o déterminer, parmi ledit ensemble local d'affichage numérique, un dispositif d'affichage numérique le mieux adapté pour attirer la foule dans une direction souhaitée,
   ∘ et faire fonctionner ledit dispositif d'affichage numérique en mode d'interaction avec la foule ;
- lorsque le système de supervision local fait fonctionner au moins un des dispositifs d'affichage numériques en mode d'interaction avec la foule, le système de supervision local analyse en permanence le comportement de l'audience et passe par plusieurs phases successives prédéterminées en fonction dudit comportement de l'audience pour progressivement augmenter son influence sur la foule ;
- ledit système de supervision local est adapté pour : lorsque le système de supervision local passe en mode d'interaction avec la foule, passer par une première phase dans laquelle ledit système de supervision local fait afficher sur ledit au moins un dispositif d'affichage numérique des données géolocalisées provenant de réseaux sociaux correspondant à une localisation dudit ensemble local d'affichage numérique ;
- ledit système de supervision local est adapté pour : lorsque le système de supervision local est dans la première phase du mode d'interaction avec la foule, déterminer si l'audience satisfait au moins un critère de ciblage d'audience indiquant que l'audience est ciblée et dans l'affirmative, passer dans une deuxième phase dans laquelle ledit système de supervision local fait afficher des contenus ciblés correspondant à l'audience sur ledit au moins un dispositif d'affichage numérique ;
- ledit système de supervision local est adapté pour : lorsque ledit système de supervision local est dans la deuxième phase du mode d'interaction avec la foule, déterminer si l'audience satisfait au moins un critère d'interactivité indiquant que l'audience est prête à interagir avec au moins un dispositif d'affichage numérique et dans l'affirmative, passer dans une troisième phase dans laquelle ledit système de supervision local fait afficher au moins un contenu interactif simple sur ledit au moins un dispositif d'affichage numérique ;
- ledit système de supervision local est adapté pour : lorsque le système de supervision local est dans la troisième phase du mode d'interaction avec la foule, déterminer si l'audience satisfait au moins un critère de domination indiquant que l'audience est prête à se laisser diriger par au moins un dispositif d'affichage numérique et dans l'affirmative, passer dans une quatrième phase dans laquelle ledit système de supervision local fait afficher au moins un contenu interactif personnalisé choisi par au moins une personne de l'audience sur ledit au moins un dispositif d'affichage numérique ;
- ledit système de supervision local est adapté pour : lorsque le système de supervision local est dans la troisième phase ou la quatrième phase du mode d'interaction avec la foule, faire afficher lesdits contenus ciblés tels que définis ci-dessus sur au moins un autre des dispositifs d'affichage numériques ;
- le dispositif de détection de foule est adapté pour refaire fonctionner tous les dispositifs d'affichage numériques dudit ensemble local d'affichage numérique en mode normal lorsque la foule s'éloigne de chaque dispositif d'affichage numérique dudit ensemble local d'affichage numérique de plus d'une distance maximale après une période de fonctionnement en mode d'interaction avec la foule.

Par ailleurs, la présente description a également pour objet un réseau de diffusion de contenus numériques comprenant au moins un premier ensemble local d'affichage numérique selon tel que défini ci-dessus et un deuxième ensemble local d'affichage numérique tel que défini ci-dessus, les systèmes de supervision locaux des premier et deuxième ensembles locaux d'affichage numériques communiquant entre eux et étant adaptés pour :
o lorsque le système de supervision local du premier ensemble local d'affichage numérique refait fonctionner tous les dispositifs d'affichage numériques dudit premier ensemble local d'affichage numérique en mode normal et détecte que la foule se déplace vers le deuxième ensemble local d'affichage numérique, déterminer parmi le deuxième ensemble local d'affichage numérique un dispositif d'affichage numérique le mieux adapté pour capter l'attention de la foule et / ou attirer la foule,
o et faire fonctionner ledit dispositif d'affichage numérique du deuxième ensemble local d'affichage numérique en mode d'interaction avec la foule.

La présente description a également pour objet un réseau de diffusion de contenus numériques comprenant au moins un ensemble local d'affichage numérique tel que défini ci-dessus et au moins un serveur distant (serveur(s) identifié(s) ou informatique en nuage (« cloud »)), dans lequel le système de supervision local de l'ensemble local d'affichage numérique comprend de l'intelligence artificielle adaptée pour au moins déterminer en temps-réel les contenus numériques à faire afficher respectivement par les dispositifs d'affichage numériques en fonction de ladite au moins une caractéristique de foule mesurée, le système de supervision local dudit ensemble local d'affichage numérique étant adapté pour communiquer audit au moins un serveur distant des informations sur le fonctionnement en mode d'interaction avec la foule dudit ensemble local d'affichage numérique, et ledit au moins un serveur distant comprenant au moins un module d'apprentissage automatique adapté pour enrichir l'intelligence artificielle du système de supervision local en fonction desdites informations sur le fonctionnement en mode d'interaction avec la foule dudit ensemble local d'affichage numérique. Eventuellement, l'intelligence artificielle du système de supervision local comprend un ensemble de règles heuristiques et ledit au moins un serveur distant est adapté pour améliorer ledit ensemble de règles heuristiques en adaptant les règles heuristiques préexistantes et / ou en créant de nouvelles règles heuristiques ajoutées audit ensemble de règles heuristiques.

### BREVE DESCRIPTION DES DESSINS

D'autres caractéristiques et avantages apparaîtront au cours de la description suivante d'une forme de réalisation, donnée à titre d'exemple non limitatif, en regard des dessins joints.

Sur les dessins :
- la figure 1 est une vue schématique partielle d'un réseau de diffusion de contenus numériques selon une forme de réalisation,
- la figure 2 est un schéma bloc d'un dispositif d'affichage numérique appartenant au réseau de la figure 1,
- la figure 3 est une vue d'un exemple d'ensemble local d'affichage numérique tel que celui figurant sur la figure 1, en cours d'interaction avec une foule ;
- la figure 4 illustre un exemple d'interaction combinée de deux ensembles locaux d'affichage numériques avec la foule ;
- la figure 5 illustre un exemple de processus mis en oeuvre par les ensembles d'affichage numériques des figures 3 et 4 ;
- et les figures 6 à 8 illustrent trois niveaux d'entraînement d'un réseau neuronal utilisable dans le réseau de diffusion de contenus numériques de la présente description.

### DESCRIPTION PLUS DETAILLEE

Sur les différentes figures, les mêmes références désignent des éléments identiques ou similaires.

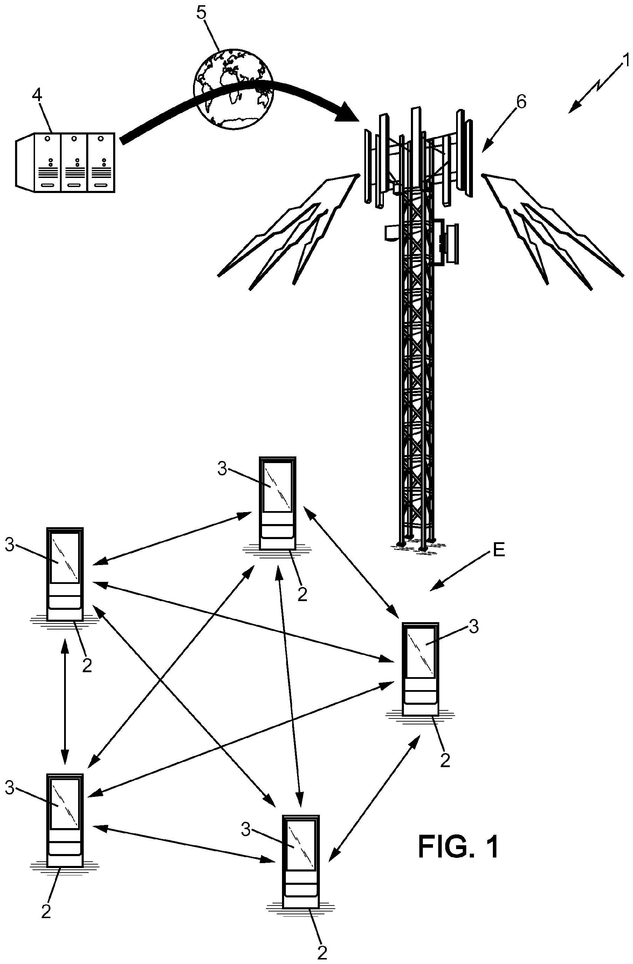

La figure 1 montre un réseau 1 de diffusion de contenus numériques comprenant une pluralité de dispositifs d'affichage numériques 2, comprenant chacun un écran numérique 3. L'écran 3 peut éventuellement être tactile, pour au moins certains des dispositifs d'affichage numériques 2.

Les contenus numériques en question peuvent comprendre notamment des vidéos et des images fixes, mais aussi des jeux interactifs ou autres.

Ces contenus numériques peuvent être transmis aux dispositifs d'affichage numériques 2 depuis au moins un serveur distant 4, par tout réseau étendu (« WAN »), notamment par le réseau internet 5. Le réseau étendu peut éventuellement comporter une ou des liaisons radio 6 (par exemple au standard LTE ou autre) vers tout ou partie des dispositifs d'affichage numériques 2.

Les dispositifs d'affichage numériques 2 peuvent être disposés notamment dans des lieux publics, c'est-à-dire tous lieux accessibles au public tels que voie publique, gares, aéroports, centres commerciaux, etc. Ils peuvent être répartis sur une large étendue, par exemple un ou une ville.

Les dispositifs d'affichage numériques 2 peuvent être regroupés en ensembles locaux d'affichage numérique E, comprenant quelques dispositifs d'affichage numériques 2, par exemple de deux à 10, répartis sur une étendue géographique relativement faible, notamment dans un rayon de quelques dizaines à quelques centaines de mètres, par exemple moins de 500 m.

Les dispositifs d'affichage numériques 2 d'un même ensemble local d'affichage numérique E peuvent communiquer entre eux en réseau local, par exemple en Wi-Fi ou LoRa. Avantageusement, les dispositifs d'affichage numériques 2 d'un même ensemble local d'affichage numérique E peuvent communiquer entre eux selon un protocole pair à pair (P2P) comme représenté par les flèches entre dispositifs d'affichage numériques 2 sur la figure 1. Le protocole pair à pair en question peut par exemple être le protocole « Whisper », ou autre.

Les dispositifs d'affichage numériques 2 d'un même ensemble local d'affichage numérique E forment ensemble une architecture informatique distribuée et décentralisée connue sous le nom de « edge couputing » ou traitement des données « à la périphérie » du réseau, c'est-à-dire à proximité des sources de données.

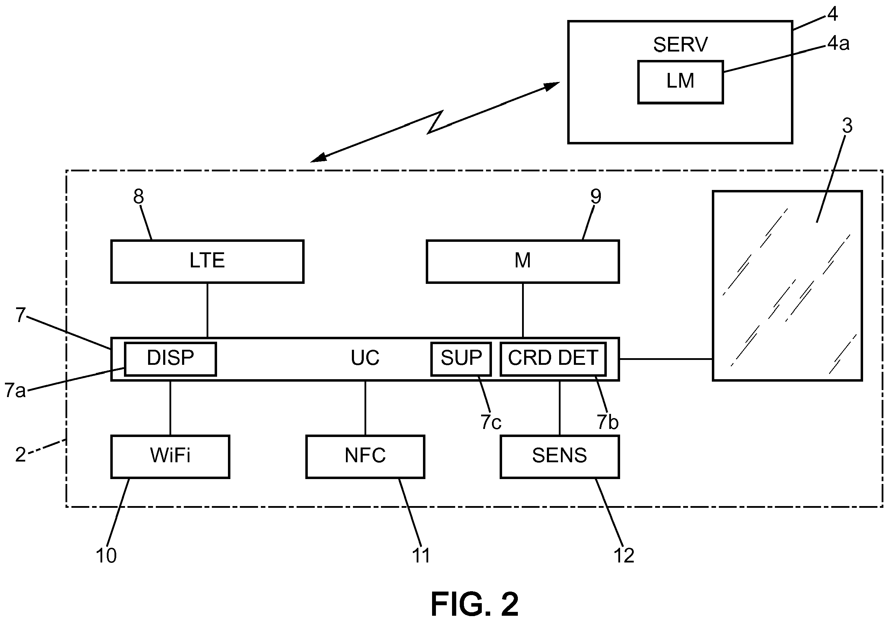

Comme représenté sur la figure 2, chaque dispositif d'affichage numérique 2 peut comporter notamment au moins une unité centrale 7 (UC) telle qu'un processeur commandant l'écran numérique 3, une interface de communication 9 (MODEM LTE ou autre) adaptée pour communiquer avec le réseau étendu 5, 6, et une mémoire de masse 9 (M) pour stocker les contenus numériques.

L'unité centrale 7 est adaptée pour communiquer avec le serveur 4 pour recevoir des contenus numériques à afficher et pour les stocker dans la mémoire 9.

Notamment, la mémoire 9 contient au moins une liste de contenus numériques (« playlist ») à faire afficher sur l'écran 3 et l'unité centrale 7 est programmée pour faire automatiquement afficher les contenus numériques de cette liste par l'écran numérique 3 (la liste de contenus numériques peut notamment être jouée en boucle sur l'écran numérique 3). La liste de contenus numériques peut être reçue déjà constituée du serveur 4, ou bien peut être déterminée par l'unité centrale 7 en fonction notamment de critères prédéfinis, à partir de l'ensemble des contenus numériques reçus du serveur 4.

Plus spécifiquement, l'unité centrale 7 exécute un module logiciel de commande d'écran 7a (DISP) qui est adapté pour communiquer avec le serveur 4, éventuellement détermine la liste de contenus numériques à faire afficher par l'écran numérique 3 et commande l'écran numérique 3.

La liste susmentionnée de contenus numériques constitue un premier groupe de contenus numériques destinés à être affichés dans un mode normal de fonctionnement du dispositif d'affichage numérique 2 (généralement, ce mode normal est un affichage séquentiel de contenus prédéfinis contenus dans une liste).

Par ailleurs, le dispositif d'affichage numérique 2 comporte au moins une interface de communication 10, par exemple une interface de communication radio (notamment « Wi-Fi » ou autre), pouvant permettre aux dispositifs d'affichage numériques 2 de communiquer ensemble comme expliqué ci-dessus, et / ou pour communiquer, par exemple par Bluetooth®, avec au moins une personne du public munie d'un terminal mobile tel qu'un « smartphone », une tablette (« smartpad ») ou autre. Cette interface de communication 10 peut être commandée par l'unité centrale 7 susmentionnée ou par une autre unité centrale électronique reliée à ladite unité centrale 7.

Le dispositif d'affichage numérique 2 comporte un dispositif de détection d'audience adapté pour capter des informations relatives aux personnes situées à proximité du dispositif d'affichage numérique 2 (ou aux véhicules transportant ces personnes).

Le dispositif de détection d'audience peut par exemple comprendre au moins un détecteur, notamment :
- au moins un détecteur 11 fonctionnant par interaction avec les terminaux mobiles des personnes du public, par exemple une interface WiFi et / ou une interface NFC longue distance et / ou autre interface RFID longue distance et / ou une interface Bluetooth®,
- et / ou un détecteur 12 (SENS) pouvant détecter des personnes, par exemple une caméra à détection de mouvement (notamment infra-rouge) et / ou un détecteur radar et / ou un détecteur de passage ou autre.

Ces exemples de détecteurs ont l'avantage de pouvoir être mis en oeuvre sans prendre d'image permettant d'identifier les personnes du public, ce qui est notamment utile lorsque la législation nationale impose cette règle.

En variante, lorsque la législation nationale le permet (ce qui est facilité par le traitement purement local des données de détection d'audience provenant des détecteurs 12), et notamment pour les applications en intérieur, le détecteur 12 peut être une caméra fonctionnant dans le spectre visible, par exemple une caméra 360 degrés et / ou une caméra 3D.

Le ou les détecteurs 11, 12 susmentionnés peuvent envoyer leurs informations à un module logiciel de détection d'audience 7b (CRD DET) du dispositif d'affichage numérique 2, qui peut être exécuté par exemple sur l'unité centrale 7 susmentionnée ou sur une autre unité centrale électronique communiquant avec ladite unité centrale.

L'ensemble local d'affichage numérique E comporte en outre un système de supervision local, comprenant des modules logiciels de supervision 7c (SUP) exécutés respectivement sur les unités centrales 7 des différents dispositifs d'affichage numériques. Le système de supervision local est adapté pour commander les modules de commande d'écran 7a respectifs des dispositifs d'affichage numériques 2 en fonction des données d'audience provenant du module de détection d'audience 7b. Plus spécialement, ce système de supervision local est adapté pour :
- à partir des informations d'audience captées, déterminer en temps réel au moins une caractéristique de foule représentative d'un comportement collectif de personnes situées à proximité des dispositifs d'affichage numériques 2,
- déterminer en temps réel les contenus numériques à faire afficher respectivement par les dispositifs d'affichage numériques 2 en fonction de ladite au moins une caractéristique de foule.

Ladite au moins une caractéristique de foule déterminée par le système de supervision local, peut comprendre au moins une densité de foule et une vitesse de déplacement de foule, notamment une vitesse de déplacement du centre de gravité de la foule.

Eventuellement, le système de supervision local est adapté pour déterminer en temps réel plusieurs caractéristiques de foule comprenant par exemple :
- la densité de foule,
- la vitesse de déplacement de foule (module du vecteur vitesse de déplacement) et une direction de déplacement de la foule (donc au total le vecteur vitesse de déplacement de la foule),
- et une proximité de la foule par rapport au dispositif d'affichage numérique 2 (notamment distance et direction du « centre de gravité » de la foule par rapport au dispositif d'affichage numérique 2).

Notamment, le système de supervision local est adapté pour faire fonctionner au moins un dispositif d'affichage numérique 2 de l'ensemble local d'affichage numérique E dans un mode d'interaction avec la foule lorsqu'une foule est identifiée par le système de supervision local, éventuellement dans certaines conditions que le système de supervision local peut recevoir par exemple du serveur distant 4 susmentionné. Dans ce mode d'interaction avec la foule, ledit dispositif d'affichage numérique 2 affiche au moins un contenu numérique préemptif choisi parmi un deuxième groupe de contenus, distinct du premier groupe de contenus susmentionné. Le ou les contenus du deuxième groupe de contenus peuvent comprendre par exemple des jeux interactifs, des contenus provenant de réseaux sociaux (notamment « Twitter », « Instagram », « Facebook » ou autres), ou encore des jeux-questionnaires (« quiz ») notamment en lien avec des contenus publicitaires.

Les modules de supervision 7c des différents dispositifs d'affichage numériques 2 de l'ensemble E communiquent entre eux, notamment par un protocole de communication pair à pair tel que décrit ci-dessus.

Plus généralement, les dispositifs de détection d'audience peuvent également être distincts des dispositifs d'affichage numériques 2, et communiquer en réseau local avec lesdits dispositifs d'affichage numériques 2 en communication pair à pair (P2P).

Outre les caractéristiques de foule déterminées localement, le système de supervision local peut aussi être adapté pour recevoir des données externes depuis au moins une ressource distante, notamment au moins le serveur distant 4 ou un autre serveur (éventuellement depuis une informatique en nuage (« cloud »)), pour notamment commander les modules de commande d'écran 7a respectifs des dispositifs d'affichage en fonction desdites données externes et / ou faire afficher certaines de ces données externes.

Les données externes en question peuvent comprendre par exemple :
- des données météorologiques,
- des données de téléphonie mobile (notamment données statistiques passées) fournies par des opérateurs de téléphonie mobile sur la localisation et l'usage des terminaux mobiles,
- des données géolocalisées provenant de réseaux sociaux.

Le système de supervision local comprend de l'intelligence artificielle répartie (distribuée) sur les modules de supervision 7c respectifs des différents dispositifs d'affichage numériques. Cette intelligence artificielle distribuée sur les modules de supervision 7c (« swarm intelligence ») peut comprendre au moins un réseau neuronal qui est adapté pour déterminer ladite au moins une caractéristique de foule, par un calcul distribué parmi lesdits modules de supervision par la communication pair à pair. Ledit au moins un réseau neuronal peut avoir plusieurs couches (notamment 5 couches) et peut être de type à apprentissage profond (« deep learning »). Pour fonctionner sur un groupe de processeurs peu puissants tels que ceux des unités centrales 7 susmentionnées, le réseau neuronal peut être notamment un réseau neuronal profond compressé, avec 60-80% de la capacité qui serait offerte par un réseau neuronal profond et élaboré, fonctionnant sur un seul processeur puissant et équipé d'un ou plusieurs GPU. Cette intelligence artificielle distribuée peut fonctionner en mode distribué selon un protocole de consensus (« consensus-based approach ») entre les modules de supervision 7c.

Le réseau de diffusion de contenus numériques 1 peut en outre comprendre au moins un module logiciel d'apprentissage automatique 4a (LM, voir la figure 2), par exemple sur le serveur distant 4 et / ou un autre serveur, par exemple dans une informatique en nuage (« cloud ») . Dans ce cas, les systèmes de supervision locaux des ensembles locaux d'affichage numérique E communiquent audit module d'apprentissage automatique 4a des informations sur le fonctionnement en mode d'interaction avec la foule desdits ensembles locaux d'affichage numériques et le module d'apprentissage automatique traite ces informations (généralement en temps différé) pour enrichir l'intelligence artificielle des systèmes de supervision locaux desdits ensembles locaux d'affichage numérique. Le module logiciel d'apprentissage automatique 4a peut être un module d'intelligence artificielle comprenant par exemple au moins un réseau neuronal, notamment à apprentissage profond (« deep learning ») et notamment de type réseau neuronal profond.

Plus précisément, l'intelligence artificielle du système de supervision local comprend un ensemble de règles heuristiques et le module d'apprentissage 4a est adapté pour améliorer ledit ensemble de règles heuristiques en adaptant les règles heuristiques préexistantes et / ou en créant de nouvelles règles heuristiques qu'il ajoute audit ensemble de règles heuristiques. Au démarrage initial de l'intelligence artificielle du système de supervision local, un ensemble de règles heuristiques et de relations de cause à effet sont chargées depuis le module d'apprentissage 4a. Tant que les caractéristiques de foule et conditions extérieures correspondent à ces règles initiales, l'intelligence artificielle fonctionne bien. Lorsqu'apparaissent de nouvelles conditions extérieures ou caractéristiques de foule, les règles heuristiques sont adaptées par le module d'apprentissage automatique (« machine learning »), qui peut notamment ajuster des « hyperparamètres » de l'intelligence artificielle pour adapter les règles existantes ou en introduire de nouvelles.

A cet effet, le module d'apprentissage automatique 4a peut comprendre deux types différents d'autoencodeurs empilés sur plusieurs niveaux, sous la forme de réseaux neuronaux convolutifs (« Convolutional Deep Learning Networks ») :
- Auto-encodeurs d'apprentissage de consolidation (« Reinforcement Learning ») utilisant des « stratégies d'évolution » : cette méthode d'apprentissage par réseaux neuronaux permet l'adaptation de règles existantes. Les « *stratégies* d'évolution » sont une forme d'apprentissage de consolidation qui utilise un plus petit nombre d'hyperparamètres pour les évolutions de règles. Les calculs sont donc plus rapides que pour d'autres algorithmes tels que le Q-Learning.
- Auto-encodeur d'apprentissage basé sur une représentation d'état ("Representation Learning") utilisant des modules LSTM (« Long Short-Term Memory ») pour créer de nouvelles règles (« rules mining »). Les modules LSTM sont largement utilisés dans le dommaine du traitement du langage, et sont utilisés ici pour découvrir de nouvelles règles et stratégies basées sur les caractéristiques de foule et caractéristiques abstraites.

Les fonctionnalités de l'intelligence artificielle du système de supervision 7c peuvent être les suivantes :

### 1. Analyse de l'audience et détermination des caractéristiques de foule :

Le système de supervision analyse les données d'audience provenant des différents détecteurs 10-12 (y compris des images fixes ou animées provenant de caméras), pour estimer des caractéristiques de foule, notamment la densité, la proximité (distance par rapport aux dispositifs d'affichage numériques 2), la vitesse.

Si les résultats de l'analyse correspondent aux conditions de lancement de mode de fonctionnement en interaction avec la foule (campagne préemptive), le système de supervision détermine sélectionne une liste de contenus présélectionnés et le contenu préemptif à afficher parmi le deuxième groupe de contenus. Dans cette détermination, des paramètres externes peuvent être pris en compte par le système de supervision, tels que l'heure, les conditions météorologiques, des événements en cours à proximité de l'ensemble E d'affichage numérique. Cette analyse est faite en continu, de sorte que la liste de contenus présélectionnés peut être mise à jour fréquemment.

Le niveau d'intelligence requis pour cette première fonctionnalité est celle du cerveau d'un mammifère inférieur (réactivité instinctive rapide en réponse à des stimuli changeant rapidement).

### 2. Analyse de la foule - Profil et caractéristiques de sentiments :

Cette fonctionnalité requiert des analyses avancées et l'association de caractéristiques abstraites et de haut niveau. Cette fonctionnalité est automatiquement activée lorsqu'au moins une des campagnes exige des caractéristiques préemptives. Le système de supervision analyse les données des détecteurs susmentionnées (données binaires, mesures, images) pour identifier un ou plusieurs profils collectifs principaux de la foule fondés sur l'analyse démographique (par exemple, sexe, catégorie socioprofessionnelle, etc.), et estimer ses principaux sentiments (par exemple : heureux, triste, fatigué, soif, occupé, festif, etc.). Dans la présente demande, « sentiment » est employé comme synonyme de « humeur » (« mood »).

Généralement, les données démographiques et les caractéristiques de sentiments, si elles sont identifiées et isolées comme composant principal, restent assez stables pendant un certain temps, par exemple de 15 mn à 1 h selon le contexte. L'intelligence requise pour cette fonctionnalité est celle du cerveau d'un mammifère supérieur, ayant les capacités :
- d'identifier des caractéristiques abstraites telles que les sentiments d'une foule,
- de fusionner et faire correspondre des caractéristiques de haut niveau et / ou des sentiments multiples,
- de raisonner de manière non-linéaire et concevoir une « stratégie » pour afficher des publicités « préemptives » (capables de retenir l'attention de la foule) qui correspondent aux sentiments de la foule.

Du fait de ces capacités, l'intelligence artificielle peut concevoir une stratégie de campagne publicitaire ciblée sur une certaine période, tant que les sentiments détectés durent. La stratégie peut être modifiée selon le contexte et les caractéristiques physiques et sentimentales de la foule (par exemple, suivre discrètement la foule avec une séquence de publicités, provoquer l'interactivité avec la foule conduisant à la domination de la foule, etc.).

Les exemples suivants montrent comment l'intelligence artificielle du système de supervision analysent les sentiments de foule en fusionnant des informations d'audience de haut niveau et des informations de bas niveau d'origine WiFi et/ou Bluetooth® et des données d'environnement.

### Exemple 1 : détection d'un seuil de présence pour des dispositifs WiFi de type : « iWatch® », « iPhone-X® »

→ démographie principale = « jeune urbain amateur de technologie »,
   + contexte externe : ville de New York, Times Square + soir (>19h),
   + caractéristiques physiques de foule : haute densité, vélocité diffuse,
   + tendance des Tweets et Instagram pour cette démographie : style de vie, amusement, détente,
→ Sentiments de foule + publicités préemptives :
   1. Soif → publicités préemptives pour des boissons,
   *2. Festif* (« Party time ») → publicités préemptives pour des restaurants, des sorties pour dîner, livraisons,
   *3. Romantique* (« Romance ») → publicités préemptives pour des cadeaux technologiques [montres, "smartphones", dispositifs mobiles connectés, ...],
→ Stratégie : provoquer de brèves interactions sur l'écran tactile 3, relatives au contexte de la publicité préemptive + poursuivre par des publicités apparentées sur des écrans voisins.

### Exemple 2 : détection d'une majorité de dispositifs WiFi de type : « Samsung Galaxy S10® »

→ démographie principale : « amateur de technologies pragmatique et économe » (« Tech-savvy pragmatic ») + contexte externe : Canary Wharf + heure du déjeuner (12-14h),
   + caractéristiques physiques de foule : haute densité, haute vélocité (vitesse + direction unique),
   + tendance des Tweets et Instagram pour cette démographie : CES Las Vegas, produits de consommation technologiques,
→ Sentiments de foule + publicités préemptives :
   1. Au courant des technologies (« Tech aware ») → publicités préemptives pour BMW® mettant en avant des caractéristiques technologiques
   2. Consommateur de style de vie (« Lifestyle consumer ») → publicités préemptives pour des réfrigérateurs intelligents Samsung®, des brosses connectées L'Oréal®,
→ Stratégie : suivre la foule discrètement par des séquences publicitaires programmatiques localisées dans la zone où prévalent des caractéristiques de foule similaires.

Le fait que l'intelligence artificielle soit locale et répartie sur les modules de supervision 7c permet de s'adapter rapidement aux changements de conditions externes et de caractéristiques d'audience.

Pour manipuler des caractéristiques multiples de foule dans l'intelligence artificielle, on peut utiliser des opérations sur des tenseurs Xᵢ qui représentent des caractéristiques ayant plusieurs composantes.

Une représentation d'un sentiment R₁ de niveau élevé impliquant par exemple trois caractéristiques X₁, X₂, X₃, on utilise le produit de tenseurs :
**R₁ : → X₁** ⊗ **X₂** ⊗ **X₃**

La fusion de haut niveau de sentiments (appelée aussi fusion de haut niveau de caractéristiques) peut être représentée par une opération de type (dans l'exemple de la fusion de trois sentiments R₁, R₂, R₃ correspondant respectivement à **X₁** ⊗ **X₂** ⊗ **X₃, X₄** ⊗ **X₅** ⊗ **X₆, X₇** ⊗ **X₉** ⊗ **X₉)** :
**R₁** ⊕ **R₂** ⊕ **R₃** : **→ (X₁** ⊗ **X₂** ⊗ **X₃)** ⊕ **(X₄** ⊗ **X₅** ⊗ **X₆)** ⊕ **(X₇** ⊗ **X₈** ⊗ **X₉)**

L'intelligence artificielle utilisée (modules de supervision 7c et module d'apprentissage automatique 4a) peut aussi être adaptée pour des actions non linéaires telles que des conceptions de règles et stratégies, en utilisant notamment des modules à base de graphes orientés acycliques pondérés (« wDAG » - « *weighted Directed Acyclic Graphs* »). Dans ce cas, on analyse la causalité spatiale directe et indirecte de représentations de sentiments de haut niveau et on en tire des conclusions (nouvelles étapes ou stratégies).

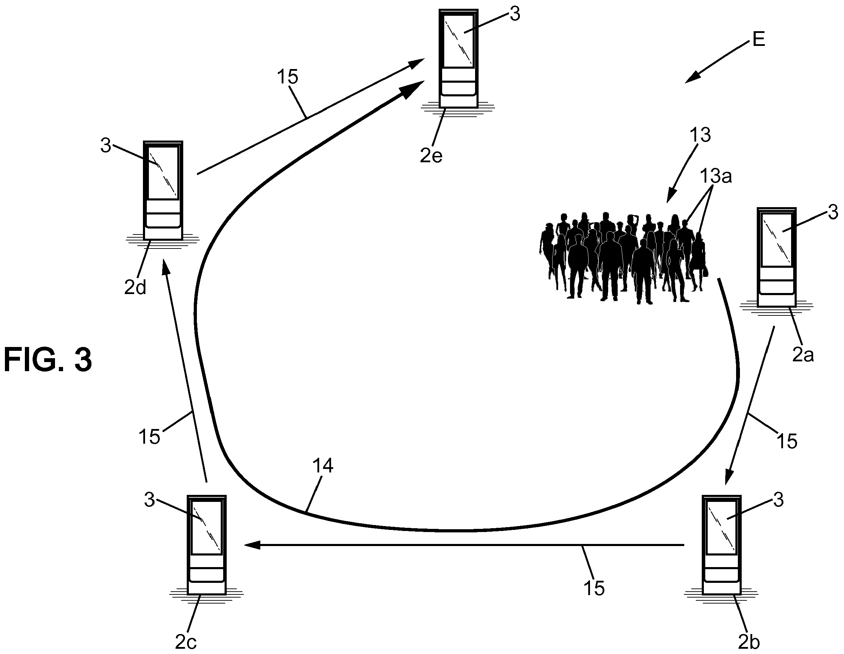

Comme illustré sur la figure 3, l'ensemble d'affichage numérique E peut fonctionner par exemple comme suit.

Sur la figure 3, les dispositifs 2 sont ici notés 2a à 2e pour les identifier individuellement, mais ils sont identiques ou similaires et correspondent tous au dispositif d'affichage 2 précédemment décrit.

Cette description est faite dans le cas où le système de supervision local est formé par des modules de supervision 7c tels que décrits ci-dessus, mais serait applicable, mutatis mutandis, au cas où le système de supervision local est sur au moins une unité locale distincte comme décrit ci-dessus.

Lorsque le système de supervision local détecte la formation d'une foule 13 de personnes 13a, c'est-à-dire d'un groupe de personnes ayant un certain comportement collectif, au voisinage d'un des dispositifs d'affichage numériques 2, par exemple le dispositif d'affichage numérique 2a de la figure 3, le système de supervision peut par exemple faire fonctionner ce dispositif d'affichage numérique 2a en mode d'interaction avec la foule et lui fait afficher un contenu préemptif appartenant au deuxième groupe de contenus, généralement spécialement adapté pour attirer l'attention de le foule.

Cette détection de foule peut intervenir notamment lorsque le système de supervision local détecte une densité de foule supérieure à une densité minimale au voisinage dudit dispositif d'affichage numérique 2a, après une période de fonctionnement en mode normal de tous les dispositifs d'affichage numérique 2 de l'ensemble local d'affichage numérique.

Le critère de détection de foule mis en oeuvre par le module de supervision 7c peut être plus complexe et faire intervenir plusieurs caractéristiques de foules mesurées et / ou certaines des données externes susmentionnées.

Par exemple, le critère de détection de foule peut combiner la densité de foule comme explicité ci-dessus avec une vitesse de foule (en module) inférieure à une vitesse maximale au voisinage dudit dispositif d'affichage numérique 2, pour éviter de détecter des personnes en mouvement rapide n'ayant que peu d'intérêt pour les contenus affichés, par exemple une foule de personnes sortant du métro ou autre.

Pendant que le dispositif d'affichage numérique 2a affiche le ou les contenus du deuxième groupe, les autres dispositifs d'affichage numériques 2b-2e de l'ensemble E peuvent éventuellement continuer à fonctionner en mode normal avec les contenus du premier groupe de contenus, ou au contraire un ou plusieurs dispositifs d'affichage numériques voisins du dispositif d'affichage numérique 2a peuvent afficher d'autres contenus du deuxième groupe.

Dès que le dispositif d'affichage numérique 2a est passé en mode de fonctionnement d'interaction avec la foule, les modules de supervision 7c des différents dispositifs d'affichage numériques 2 analysent collectivement le comportement de la foule 13, notamment grâce à leur intelligence artificielle distribuée à la proximité (« edge »).

Notamment, les modules de supervision 7c des différents dispositifs d'affichage numériques 2 déterminent en temps réel quel dispositif d'affichage numérique 2a - 2e affiche le ou les contenus du deuxième groupe.

Par exemple, les modules de supervision 7c des différents dispositifs d'affichage numériques 2 déterminent en permanence, parmi ledit ensemble local d'affichage numérique E, quel est le dispositif d'affichage numérique 2 le plus proche de la foule 13 (ou le dispositif d'affichage numérique 2 le plus à même d'attirer l'attention de la foule 13) et fait fonctionner ledit dispositif d'affichage numérique 2 le plus proche de la foule en mode d'interaction avec la foule. Dans l'exemple de la figure 3, si la foule 13 se déplace selon la flèche 14, alors les modules de supervision 7c changent successivement le dispositif d'affichage numérique fonctionnant selon le mode d'interaction avec la foule qui devient le dispositif d'affichage 2b, puis 2c, puis 2d, puis 2e, selon les flèches 15, au fur et à mesure du déplacement de la foule 13.

En variante, les modules de supervision 7c des différents dispositifs d'affichage numériques 2 déterminent en permanence, parmi ledit ensemble local d'affichage numérique E, quel est le dispositif d'affichage numérique 2 le mieux adapté pour attirer la foule dans une direction souhaitée et faire fonctionner ledit dispositif d'affichage numérique 2 en mode d'interaction avec la foule.

Lorsque les modules de supervision 7c des différents dispositifs d'affichage numériques 2 de l'ensemble local d'affichage numérique E déterminent que la foule est dispersée ou qu'elle est sortie du rayon d'action de l'ensemble E (par exemple si la foule s'éloigne de chaque dispositif d'affichage numérique 2 dudit ensemble local d'affichage numérique E de plus d'une distance maximale), ils refont fonctionner tous les dispositifs d'affichage numériques 2 dudit ensemble local d'affichage numérique E en mode normal après une période de fonctionnement en mode d'interaction avec la foule.

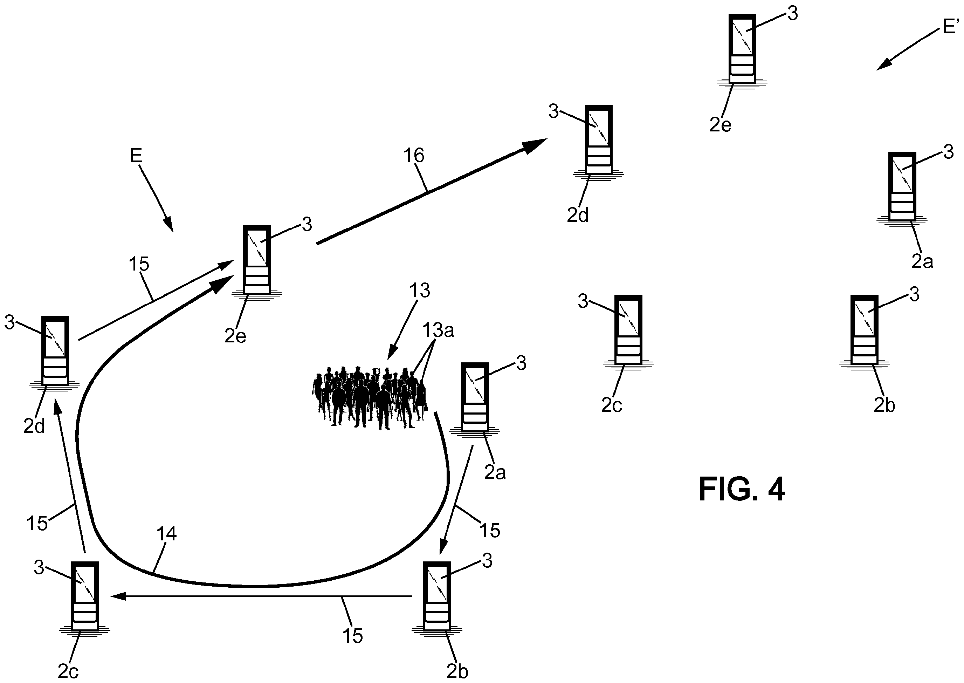

Eventuellement, comme représenté sur la figure 4, si le réseau de diffusion de contenus numériques 1 comporte un ensemble d'affichage numérique E' voisin de l'ensemble E, les systèmes de supervision locaux des deux ensembles locaux d'affichage numériques E, E' peuvent communiquer entre eux (en réseau local et / ou par le réseau étendu 5, 6) pour que, lorsque le système de supervision local du premier ensemble local d'affichage numérique E refait fonctionner tous les dispositifs d'affichage numériques 2 dudit premier ensemble local d'affichage numérique E en mode normal et que la foule se déplace vers le deuxième ensemble local d'affichage numérique E', déterminer parmi le deuxième ensemble local d'affichage numérique E' un dispositif d'affichage numérique 2 le mieux adapté pour capter l'attention de la foule et / ou attirer la foule, et faire fonctionner ledit dispositif d'affichage numérique 2 du deuxième ensemble local d'affichage numérique E' en mode d'interaction avec la foule.

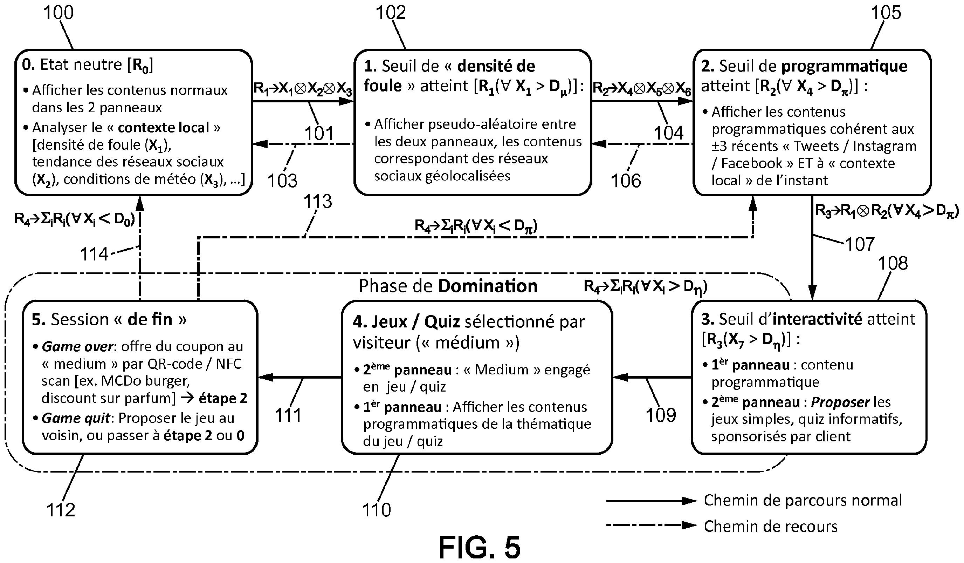

La figure 5 montre un exemple particulier de processus mis en oeuvre dans un ensemble E comportant par exemple deux dispositifs d'affichage numériques.

Dans cet exemple, l'intelligence artificielle du système de supervision local est initialement à l'état neutre R₀ (100), c'est-à-dire que les dispositifs d'affichage numériques 2 fonctionnent chacun en mode normal et affichent des contenus du premier groupe de contenus comme expliqué précédemment.

Dans cet état, l'intelligence artificielle analyse en permanence le contexte local, qui peut comprendre par exemple trois paramètres X₁ (par exemple la densité de foule), X₂ (tendances sur les réseaux sociaux), X₃ (conditions météorologiques). Comme expliqué précédemment, cette analyse peut être faite en déterminant un critère (sentiment) dont le tenseur est **R₁ : →** X₁ ⊗ X₂ ⊗ X₃ tel que défini précédemment.

Lorsque R₁ (en module) dépasse un certain seuil Dµ, l'intelligence artificielle entre en mode d'interaction avec la foule et commence à faire afficher par les dispositifs d'affichage 2 des contenus appartenant au deuxième groupe de contenus. L'intelligence artificielle analyse en permanence le comportement de l'audience et passe par plusieurs phases successives prédéterminées en fonction dudit comportement de l'audience pour progressivement augmenter son influence sur la foule.

Plus spécifiquement, l'intelligence artificielle du système de supervision entre d'abord (flèche 101) dans une première phase 102 dans laquelle ladite intelligence artificielle fait afficher sur les dispositifs d'affichage numériques 2 des données géolocalisées provenant de réseaux sociaux correspondant à une localisation dudit ensemble local d'affichage numérique E.

Ladite intelligence artificielle continue à surveiller l'audience et détermine par exemple un deuxième critère R₂ à partir d'autres paramètres X₄, X₅, X₆ (**R₂ : →** X₄ ⊗ X₅ ⊗ X₆). Si R₁ diminue sous le seuil D_{µ}, ladite intelligence artificielle revient à l'état neutre 100 (flèche 103).

Lorsque R₂ atteint un certain seuil de programmatique D_{π} (critère de ciblage d'audience indiquant que l'audience est ciblée), ladite intelligence artificielle passe (flèche 104) dans une deuxième phase 105 de programmatique dans laquelle ladite intelligence artificielle fait afficher des contenus ciblés correspondant à l'audience sur les dispositifs d'affichage numériques 2. Si R₂ repasse sous le seuil de programmatique Dπ, ladite intelligence artificielle revient à la phase 102 (flèche 106).

Lorsque ladite intelligence artificielle détermine que l'audience satisfait au moins un critère d'interactivité indiquant que l'audience est prête à interagir avec au moins un dispositif d'affichage numérique 2 (par exemple, en fonction d'un critère R₃ qui est la fusion de R₁ et R₂), ladite intelligence artificielle passe (flèche 107) dans une troisième phase 108 dans laquelle ladite intelligence artificielle fait afficher au moins un contenu interactif simple sur un des dispositifs d'affichage numériques 2 (jeux, jeux-questionnaires (« quiz »), etc.), l'autre dispositif 2 restant dans le mode de fonctionnement avec affichage des contenus programmatiques.

Ensuite, si ladite intelligence artificielle détermine que l'audience satisfait au moins un critère de domination indiquant que l'audience est prête à se laisser diriger par au moins un dispositif d'affichage numérique 2 (par exemple, un critère R₄ doit être supérieur à un seuil Dη, R₄ étant la fusion de plusieurs sentiments Rᵢ tels que R₁, R₂, R₃ et / ou d'autres), ladite intelligence artificielle passe (flèche 109) dans une quatrième phase 110 dans laquelle ladite intelligence artificielle fait afficher un contenu interactif personnalisé choisi par une personne de l'audience notamment par interaction avec l'écran 3 s'il est tactile ou avec une autre interface (interface radio WiFi ou Bluetooth® par l'intermédiaire du téléphone mobile de la personne, interface actionnée par les mains sans contact, etc.) sur un des dispositifs d'affichage numériques 2, l'autre dispositif 2 restant en mode programmatique.. Le contenu interactif personnalisé peut notamment être un jeu questionnaire (« quiz »).

Une fois que le contenu interactif personnalisé a été joué, ladite intelligence artificielle passe (flèche 111) dans une phase de fin 112 où soit un contenu interactif personnalisé est immédiatement choisi par une autre personne de l'audience (et on retourne en phase 110), soit ladite intelligence artificielle repasse (flèche 113 à la deuxième phase 105 si le critère R₄ est inférieur au seuil Dπ susmentionné mais supérieur à un seuil D₀, soit ladite intelligence artificielle repasse) l'état neutre 100 si le critère R₄ est inférieur au seuil D₀.

On comprendra que grâce aux capacités susmentionnées de l'intelligence artificielle du système de supervision local, formé par les modules de supervision 7c de l'ensemble local d'affichage numérique E, elle peut traiter toutes les situations qui se présentent en local, donc de façon rapide, sans consommer de bande passante de télécommunication et sans la latence qui serait introduite par un traitement automatique sur une infrastructure à distance (« on premises ») ou en info-nuage (« cloud IaaS »).

Dans un mode de réalisation particulier, le module d'apprentissage automatique 4a peut comporter un modèle linguistique qui est adapté pour apprendre à partir des interactions multimodales du système (voix (captée par exemple par des microphones appartenant aux dispositifs d'affichage numériques 2 ou autres), texte (provenant notamment des réseaux sociaux), détecteurs 12, conditions extérieures, etc.) pour prédire :
- sur l'écran numérique d'interaction : de nouvelles phrases à afficher ou de nouvelles interactions pour prolonger le mode d'interaction avec la foule,
- sur le ou les écrans juxtaposés à l'écran numérique d'interaction : de nouvelles publicités à afficher, ciblées sur l'audience spécifique avec laquelle l'interaction est en cours.

Cet apprentissage peut être réalisé par un apprentissage par transfert à trois niveaux :
1. Préapprentissage (2 couches neuronales pour texte et voix) du modèle linguistique sur un corpus général de données textuelles et vocales, effectué par exemple à intervalles réguliers et espacés, par exemple une fois par semaine ;
2. Apprentissage fin du modèle linguistique (1 couche neuronale) par une combinaison du texte, de voix et des signaux / événements sur des tâches spécifiques, par exemple pour chaque campagne spécifique et / ou pour un jour et une heure spécifiques ;
3. Mise au point fine d'un classificateur (2 couches neuronales) de contexte pour des tâches ciblées, ce classificateur étant ensuite téléchargé vers le ou chaque ensemble local E concerné.

Les différentes phases d'apprentissage (neurolinguistiques ainsi que classification) peuvent être effectuées dans une infrastructure nuage (IaaS) avec les composants spécialisés (CPU puissants, GPU, RAM, etc.).

Le classificateur susmentionné peut constituer au moins partiellement le réseau neuronal susmentionné distribué sur les modules de supervision 7c ou constituer un réseau neuronal supplémentaire exécuté sur un serveur local (« edge server » non représenté) fonctionnant par exemple en réseau local avec les modules de supervision 7c de l'ensemble local E.

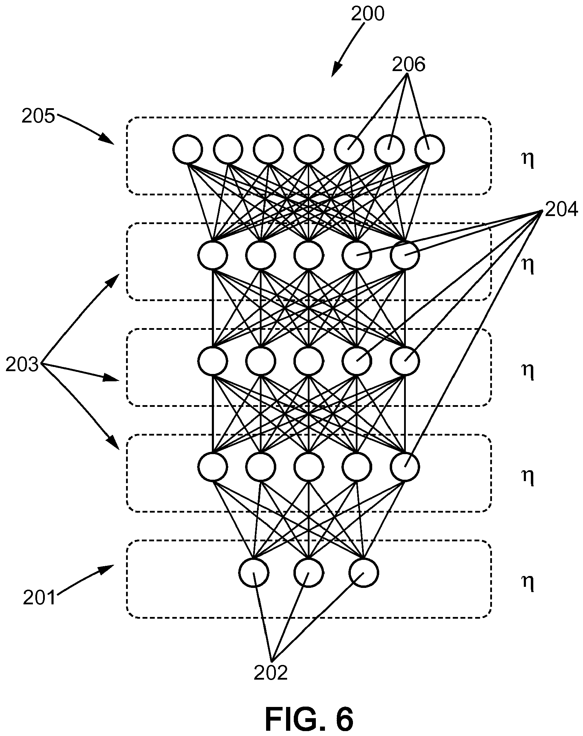

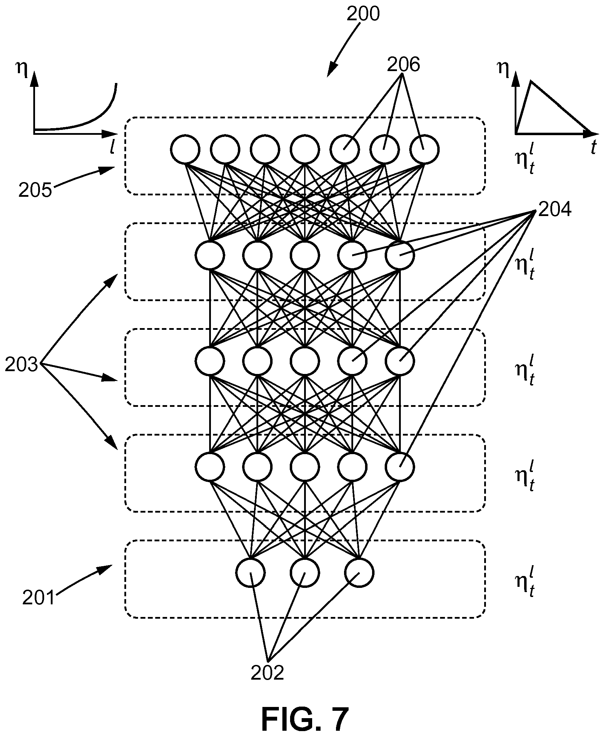

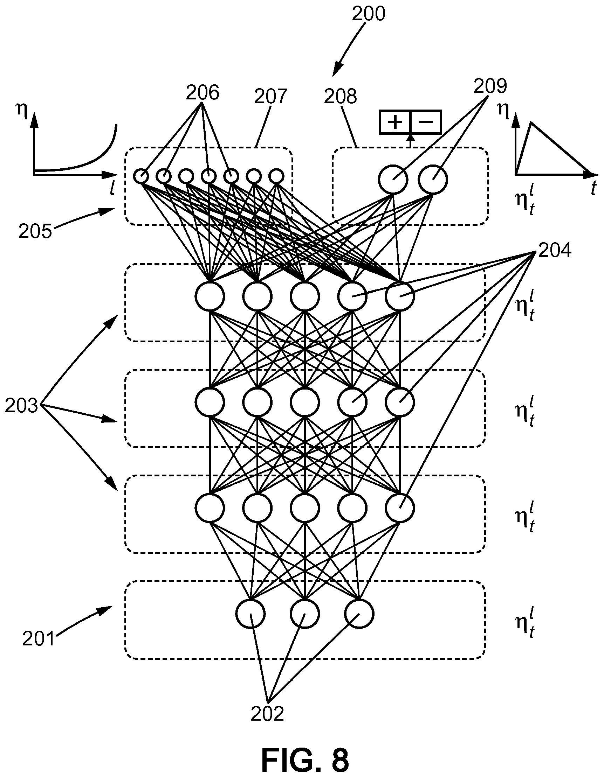

Chacun de ces niveaux d'apprentissage peut être réalisé par un réseau neuronal profond, par exemple un réseau neuronal 200 à 5 couches, tel que représenté sur les figures 6 à 8 respectivement pendant les 3 niveaux d'apprentissage. Le réseau neuronal profond 200 peut avoir par exemple une couche d'entrée 201 ayant des noeuds d'entrée 202, trois couches superposées 203 de neurones sigmoïdes 204 et une couche de sortie 205 ayant des noeuds de sortie 206. Après le troisième niveau d'apprentissage (figure 8), la couche de sortie 205 du réseau neuronal 200 comprend non seulement l'ensemble 207 de noeuds de sortie 206 susmentionnés, mais également un ensemble 208 de deux noeuds de sortie 209 de classificateur.

L'apprentissage du niveau 2 peut être réalisé par apprentissage discriminant, pour capturer différents types d'information dans chaque couche de réseau neuronal et par apprentissage « triangulaire » (STLR, « Slanted Triangular Learning Rate ») avec un taux d'apprentissage accéléré, ce dernier pour faciliter un apprentissage rapide basé sur une population d'entrainement / corpus très réduit (20 à 50 échantillons pour l'entrainement spécialisé comme expliqué ci-dessous).

L'apprentissage de niveau 3 peut comporter un déblocage progressif des couches de neurones après chaque époque d'itérations d'apprentissage (« gradual unfreezing of layers per epoch »). Ceci est utile pour l'apprentissage spécialisé progressif par chaque couche, par exemple :
- Entrainement de la 1ère couche : plus longue époque d'apprentissage générique basé par exemple sur « Generalised Text corpus Wikitext-103 » ;
- Entrainement de la 2ème couche : assez longue époque d'apprentissage sur des énonciations de textes (« text utterances ») pour apprendre les mots clés utilisés, basé par exemple sur « Voice corpus-Microsoft Speech Language Translation (MSLT) » ;
- Entrainement de la 3ème couche : Apprentissage spécialisé basé sur la combinaison de texte, de la voix, et les signaux / événements récupérés par des capteurs (« event-based sensor data, hashtags, tokens, flags »). Les échantillons d'entrainement avec cette combinaison sont relativement rares à trouver et donc nécessitent un apprentissage spécialisé basé sur peu d'échantillons (entre 20 et 50 échantillons pour les différents cas spécifiques) ;
- Entrainement du classificateur - 4ème et 5ème couches : « Sentiment analysis dataset Yelp full » + « Question completion: TREC-6 ». Apprentissage orienté par un graphe de connaissance (« knowledge graph ») pour apprendre les combinaisons intelligentes et contextuelles de texte, de la voix, et les signaux / événements récupérés par des capteurs (« event-based sensor data, hashtags, tokens, flags ») afin de classifier les comportements intéressants de l'audience à cibler lors de diffusion d'une campagne.

L'apprentissage des différentes couches ainsi que la création et le raffinement du graphe de connaissance (« knowledge graph ») pour le classificateur peuvent être effectués sur l'info-nuage (« cloud IaaS »). Après un apprentissage complet des différentes couches susmentionnées, une forme de réseau neuronal compact et compressé avec des paramètres bien configurés, sera téléchargée sur ledit ensemble local d'affichage pour le fonctionnement indépendant à la proximité, notamment la diffusion intelligente des publicités ciblées sur l'audience devant ledit ensemble local d'affichage, ainsi que pour l'interaction avec l'audience, comme susmentionné.

## Revendications

1. Ensemble local d'affichage numérique (E) comprenant plusieurs dispositifs d'affichage numériques (2) situés à proximité les uns des autres, destinés à être vus par des personnes du public (13a) et comprenant chacun au moins un écran numérique (3) et une unité centrale (7) comportant un module de commande d'écran (7a) adapté pour faire afficher des contenus numériques par l'écran numérique (3),
dans lequel ledit ensemble local d'affichage numérique (E) comporte en outre des dispositifs de détection d'audience (11, 12, 7b) adaptés pour capter des informations relatives aux personnes situées à proximité des dispositifs d'affichage numériques (2),
dans lequel l'ensemble local d'affichage numérique (E) comporte en outre un système de supervision local adapté pour :
- à partir des informations captées, déterminer en temps réel au moins une caractéristique de foule représentative d'un comportement collectif des personnes situées à proximité des dispositifs d'affichage numériques (2), ladite au moins une caractéristique de foule étant choisie parmi une densité de foule et une vitesse de déplacement de foule, et
- commander les modules de commande d'écran (7a) respectifs des dispositifs d'affichage numériques (2) en fonction de ladite au moins une caractéristique de foule, ledit système de supervision local étant adapté pour déterminer en temps réel les contenus numériques à faire afficher respectivement par les dispositifs d'affichage numériques (2) en fonction de ladite au moins une caractéristique de foule mesurée,
dans lequel le système de supervision local comprend des modules de supervision (7c) appartenant respectivement aux unités centrales (7) de plusieurs dispositifs d'affichage de l'ensemble d'affichage numérique (E), les modules de supervision (7c) communiquant entre eux par un protocole de communication pair à pair,
et ledit système de supervision local comprend une intelligence artificielle répartie sur lesdits modules de supervision (7c), qui est adaptée pour déterminer ladite au moins une caractéristique de foule, par un calcul distribué parmi lesdits modules de supervision par la communication pair à pair.

2. Ensemble local d'affichage numérique selon la revendication 1, dans lequel ledit système de supervision local est adapté pour déterminer plusieurs caractéristiques de foule comprenant la densité de foule, la vitesse de déplacement de foule, une direction de déplacement de la foule et une proximité de la foule par rapport à au moins un des dispositifs d'affichage numériques (2).

3. Ensemble local d'affichage numérique selon l'une quelconque des revendications précédentes, dans lequel ledit système de supervision local est adapté pour recevoir des données externes depuis au moins une ressource distante (4) et pour commander les modules de commande d'écran (7a) respectifs des dispositifs d'affichage en fonction desdites données externes.

4. Ensemble local d'affichage numérique selon la revendication 3, dans lequel lesdites données externes comprennent des données météorologiques.

5. Ensemble local d'affichage numérique selon la revendication 3 ou la revendication 4, dans lequel lesdites données externes comprennent des données de téléphonie mobile fournies par des opérateurs de téléphonie mobile sur la localisation et l'usage des terminaux mobiles.

6. Ensemble local d'affichage numérique selon l'une quelconque des revendications 3 à 5, dans lequel lesdites données externes comprennent des données géolocalisées provenant de réseaux sociaux.

7. Ensemble local d'affichage numérique selon l'une quelconque des revendications précédentes, dans lequel le dispositif de détection d'audience (11, 12, 7b) comprend au moins un détecteur choisi parmi une caméra, une interface WiFi, une interface NFC, une interface Bluetooth®, un détecteur radar, un détecteur de passage.

8. Ensemble local d'affichage numérique selon l'une quelconque des revendications précédentes, dans lequel au moins un des dispositifs d'affichage numériques (2) comporte une interface d'entrée permettant à une personne du public de commander ledit dispositif d'affichage numérique.

9. Ensemble local d'affichage numérique selon l'une quelconque des revendications précédentes, dans lequel chaque dispositif d'affichage numérique (2) est adapté pour fonctionner :
- soit en mode normal où ledit dispositif d'affichage numérique (2) affiche des contenus numériques choisis parmi un premier groupe de contenus,
- soit dans un mode d'interaction avec la foule où ledit dispositif d'affichage numérique (2) affiche au moins un contenu numérique choisi parmi un deuxième groupe de contenus préemptifs,
ledit système de supervision local étant adapté pour faire fonctionner au moins un des dispositifs d'affichage numériques (2) de l'ensemble local d'affichage numérique en mode d'interaction avec la foule lorsqu'une foule est identifiée.

10. Ensemble local d'affichage numérique selon La revendication 9, dans lequel système de supervision local est adapté pour déterminer en temps réel au moins la densité de foule et le système de supervision local est adapté pour faire fonctionner au moins un des dispositif d'affichage numérique (2) en mode d'interaction avec la foule lorsque le système de supervision local détecte une densité de foule supérieure à une densité minimale au voisinage dudit au moins un dispositif d'affichage numérique (2) après une période de fonctionnement en mode normal.

11. Ensemble local d'affichage numérique selon la revendication 10, dans lequel ledit système de supervision local est adapté pour déterminer en outre, en temps réel, au moins la vitesse de foule et le système de supervision local est adapté pour faire fonctionner au moins un des dispositifs d'affichage numériques (2) en mode d'interaction avec la foule lorsque le système de supervision local détecte une densité de foule supérieure à une densité minimale et une vitesse de foule inférieure à une vitesse maximale au voisinage dudit au moins un dispositif d'affichage numérique (2).

12. Ensemble local d'affichage numérique selon la revendication 10 ou la revendication 11, dans lequel le système de supervision local est adapté pour déterminer en outre, en temps réel, au moins une proximité de la foule par rapport à chaque dispositif d'affichage numérique (2) de l'ensemble local d'affichage numérique et le système de supervision local est adapté pour déterminer, dans ledit ensemble local d'affichage numérique (E), au moins un dispositif d'affichage numérique (2) le plus proche de la foule et faire fonctionner ledit au moins un dispositif d'affichage numérique (2) le plus proche de la foule en mode d'interaction avec la foule.

13. Ensemble local d'affichage numérique selon la revendication 12, dans lequel le système de supervision local est adapté pour, en fonction de ladite direction de déplacement de foule et de ladite proximité de la foule par rapport à chaque dispositif d'affichage numérique (2) de l'ensemble local d'affichage numérique :
- déterminer, dans ledit ensemble local d'affichage numérique, au moins un dispositif d'affichage numérique (2) le mieux adapté pour attirer la foule dans une direction souhaitée,
- et faire fonctionner ledit au moins un dispositif d'affichage numérique (2) en mode d'interaction avec la foule.

14. Réseau de diffusion de contenus numériques selon l'une quelconque des revendications précédentes, dans lequel ladite intelligence artificielle répartie sur les modules de supervision (7c) comprend au moins un réseau neuronal.

15. Réseau de diffusion de contenus numériques selon la revendication 14, dans lequel ledit au moins un réseau neuronal est au moins un réseau neuronal profond compressé.
